**Europäisches Patentamt**

**European Patent Office**

**Office européen des brevets**

(19)

(11) Veröffentlichungsnummer: **0 248 857**
**B1**

(12)
# EUROPÄISCHE PATENTSCHRIFT

(45) Veröffentlichungstag der Patentschrift: **12.09.90**

(51) Int. Cl.⁵: **B 01 D 53/34**

(21) Anmeldenummer: **87900096.6**

(22) Anmeldetag: **02.12.86**

(86) Internationale Anmeldenummer:
**PCT/EP86/00698**

(87) Internationale Veröffentlichungsnummer:
**WO 87/03507 18.06.87 Gazette 87/13**

(54) **VERFAHREN ZUR SIMULTANEN TROCKENABSORPTION VON S O 2 UND REDUKTION VON N O X BEI DER WIRBELSCHICHTFEUERUNG.**

(30) Priorität: **09.12.85 DE 3543442**
**13.03.86 DE 3608315**

(43) Veröffentlichungstag der Anmeldung:
**16.12.87 Patentblatt 87/51**

(45) Bekanntmachung des Hinweises auf die
Patenterteilung:
**12.09.90 Patentblatt 90/37**

(84) Benannte Vertragsstaaten:
**AT BE CH DE FR GB IT LI LU NL SE**

(56) Entgegenhaltungen:
**DE-A-2 532 471**
**DE-A-3 018 743**
**US-A-4 424 197**

(73) Patentinhaber: **Hölter, Heinz, Dipl.-Ing.**
**Beisenstrasse 39-41**
**D-4390 Gladbeck (DE)**

(72) Erfinder: **IGELBÜSCHER, Heinrich**
**Marcq-en-Baroeul-Strasse 60**
**D-4390 Gladbeck (DE)**
Erfinder: **GRESCH, Heinrich**
**Franz-Lehàr-Strasse 25**
**D-4600 Dortmund-Wickede (DE)**
Erfinder: **DEWERT, Heribert**
**Bahnhofstrasse 23**
**D-4390 Gladbeck (DE)**

(74) Vertreter: **Spalthoff, Adolf, Dipl.-Ing. et al**
**Pelmanstrasse 31 Postfach 34 02 20**
**D-4300 Essen 1 (DE)**

Courier Press, Leamington Spa, England.

**Beschreibung**

Es ist bekannt, daß die Zugabe von z.B. Kalkstein oder Dolomit, von Branntkalk oder Dolomitkalk, von Kalk- oder Dolomithydrat zur Kohle oder dem Heizöl von Feuerungen, insbesondere einer Wirbelschichtfeuerung, die SO2—, HCl und HF-Belastungen im Rauchgasstrom mindert.

In der Literatur ist vielfach beschrieben worden, das mit da mit calciumhaltigen Sorbentien die Einbindung von SO2, HCl, HF und ähnlichen sauren Schadstoffen im Temperaturbereich von 800—900°C zweckdienlich wäre.

Überraschenderweise wurde nun gefunden, daß mit hochaktivem Branntkalk oder Dolomitkalk in diesem Temperaturbereich keinesweg die optimale Schadstoffbindung abläuft. Stattdessen wird erfindungsgemäß vielmehr vorgeschlagen, im Temperaturbereich von 350—450°C Teilchen von durch Calcinierung von Kalkstein, Dolomit oder Calcium(aluminium)silikaten in der Wirbelschicht und Zugabe von Wasserdampf zur Bildung von Kalkhydrat hergestellten und mit Ammoniumsalzen angereicherten Sorbentien, deren Porendurchmesser bei 10 nm liegen, einzublasen.

Es wurde nämlich gefunden, daß dann, wenn die Porendurchmesser der Sorbensteilchen bei 10 nm und nicht wie bisher bei 100 nm liegen, sich eine günstigere Entschwefelungswirkung mit einem Optimum bei 400°C zeigt. Hierdurch wird auch die aktive Oberfläche von bisher 5 $m^2$/g auf 50 $m^2$/g gesteigert.

Außerdem wird die Absorption durch die Zugabe von Wasserdampf verbessert, da eine Oberflächenvergrößerung der Sorbensteilchen auftritt. Aus Branntkalk/Dolomitkalk entsteht über Kalk-/Dolomithydrat ein Kalk-/Dolomitkalk von vergrößerter Oberfläche.

Weiterhin wird durch das Versetzen des festen Entschwefelungsmittels mit Ammoniumsalzen gasförmiges Ammoniak freigesetzt, das bei den Einblas-Temperaturen von 350—450°C als Reduktionsmittel für Stickoxide wirkt mit den Produkten Stickstoff und Wasserdampf. Bei den bisherigen Arbeitstemperaturen von 800°C würde freigesetztes Ammoniak mit dem anwesenden Sauerstoff verbrennen und so Stickoxide bilden anstatt diese — wie hier bei 400°C — zu vernichten.

**Patentanspruch**

Verfahren zur simultanen Trockenabsorption von SO2 und Reduktion von NOx bei der Wirbelschichtfeuerung, dadurch gekennzeichnet, daß im Temperaturbereich von 350—450°C Teilchen von durch Calcinierung von Kalkstein, Dolomit oder Calcium(aluminium)silikaten in der Wirbelschicht und Zugabe von Wasserdampt zur Bildung von Kalkhydrat hergestellten und mit Ammoniumsalzen angereicherten Sorbentien, deren Porendurchmesser bei 10 nm liegen, eingeblasen werden.

**Revendication**

Procéde pour effecteur simultanément une absorption à sec de $SO_2$ et une réduction de NOx, lors d'un chauffage en lit fluidisé, caractérisé en ce que, dans le domaine de températures de 350—450°C, on introduit par soufflage des particules d'adsorbant, préparé par calcination de pierre à chaux, de dolomite ou d'alumino-silicate de calcium dans le lit fluidisé et addition de vapeur d'eau pour la formation d'hydrate de chaux et enrichi en sel d'ammonium, et dont les pores ont un diamètre d'environ 10 nm.

**Claim**

1. Process for the simultaneous dry absorption of $SO_2$ and reduction of NOx in fluid bed firing, characterised in that in a temperature range between 350 and 450°C particles of sorbents which are produced by the calcining of limestone, dolomite or calcium (aluminium) silicates in the fluid bed and the addition of water vapour in order to form lime hydrate, are enriched with ammonium salts and of which the pore diameter is 10 nm are blown in.